# EUROPÄISCHE PATENTSCHRIFT

(11) **EP 0 489 338 B1**
(45) Veröffentlichungstag und Bekanntmachung des Hinweises auf die Patenterteilung: **06.03.1996**
(21) Anmeldenummer: 91120165.5
(22) Anmeldetag: 26.11.1991
(51) Int. Cl.: H04N 1/40, H04N 1/393

(54) **Verfahren zum Umsetzen von Bilddaten für Faksimiledruckwerke mit unterschiedlichen Auflösungen**
Image data conversion method for facsimile printers using different resolutions
Procédé de conversion de données pour imprimantes de fac-similé à différentes résolutions

(30) Priorität: 04.12.1990 DE 4038645
(43) Veröffentlichungstag der Anmeldung: 10.06.1992
(73) Patentinhaber: SIEMENS AKTIENGESELLSCHAFT, D-80333 München (DE)
(72) Erfinder: Bock, Gerhard, W-8000 München 70 (DE)

(56) Entgegenhaltungen:
- EP-A- 0 102 550
- EP-A- 0 137 208
- EP-A- 0 259 138
- US-A- 4 651 223
- US-A- 4 841 375
- IBM TECHNICAL DISCLOSURE BULLETIN Bd. 31, Nr. 11, April 1989, ARMONK, NY, US Seiten 57 - 59; 'Method for scaling gray level image'
- IBM TECHNICAL DISCLOSURE BULLETIN Bd. 17, Nr. 4, September 1974, Seiten 1104 - 1105; R.L. FOWLER: 'FACSIMILE COMPATIBILITY WITH DIFFERENT RESOLUTIONS'

## Beschreibung

Die Erfindung betrifft ein Verfahren zum Umsetzen von Bilddaten für Faksimiledruckwerke mit unterschiedlichen Auflösungen, wcbei die ankommenden Bilddaten jeweils für eine ganze Vorlagenseite vor dem Ausdruck abgespeichert werden, wobei je Bildpunktzeile ankommend 1728 Bildpunkte vorgegeben sind und wobei die Bildpunkte einer Bilddatenzeile in Blöcke und untereinander liegende Bildpunktzeichen in Zyklen aufgeteilt sind.

Ein solches Verfahren ist aus dem Dokument US-A-4 841 375 bekannt.

Es ist bereits bekannt, zur Anpassung von Bildverarbeitungssystemen Serien-Parallelwandler vorzusehen, die die Bildsignale jeweils einer Bildpunktzeile in Blöcke mit n Bits unterteilen, wo Speicher vorgesehen sind, in denen durch diese n Bits ein Datenwort mit jeweils m Bits adressiert wird, wobei durch die Blöcke mit jeweils m Bits wieder eine Zeile gebildet wird und wobei Parallel-Serienwandler vorgesehen sind, die die Blöcke einer Zeile mit jeweils m Bits in Bildsignale umwandeln (DE-A-32 29 777). Mit dieser Methode können beliebige Umsetzungen erfolgen, wobei die Methode allerdings relativ aufwendig ist.

Die Aufgabe der Erfindung soll nun darin bestehen, ein Verfahren zum Umsetzen von Bilddaten für ein Faksimiledruckwerk mit 204,1 dpi in horizontaler Richtung und 195,6 dpi in vertikaler Richtung in Bilddaten für ein Faksimiledruckwerk von 300 dpi in horizontaler und vertikaler Richtung zu finden, das einfach zu realisieren ist und wobei eine geforderte geometrische Verzerrung von 1% nicht überschritten wird.

Dies wird dadurch erreicht, daß zur Umsetzung in horizontaler Richtung und damit in einer Bildpunktzeile 54 Blöcke mit je 32 Bildpunkten gebildet werden, wobei beim dem Abspeichern der Seite nachfolgenden Ausdrucken in einer Bildverarbeitungseinheit (BDV) jeder zweite Bildpunkt verdoppelt wird, die Verdoppelung des 32. Bildpunktes jedoch durch den ersten Bildpunkt (1') des nächsten Blockes ersetzt wird und daß zur Umsetzung in vertikaler Richtung und damit bezogen auf die aufeinanderfolgenden Bildpunktzeilen ein Zyklus von je 30 Bildpunktzeilen gebildet wird, wobei beim Ausdrucken mittels der Bildverarbeitungseinheit (BDV) alle ungeraden Bildpunktzeilen und die dreißigste Bildpunktzeile (30) doppelt an das Faksimiledruckwerk abgegeben werden.

Der Vorteil der Erfindung besteht darin, daß das Umsetzverfahren einfach realisierbar ist, die geforderte Verzerrungsgrenze nicht überschreitet und außerdem nur den Speicherplatz für die Bildsignale für die geringere Auflösung benötigt.

Das erfindungsgemäße Verfahren wird anhand von drei Figuren näher erläutert.

Die Figur 1 zeigt den grundsätzlichen Aufbau einer Faksimileempfangsstation mit Empfangseinheit EE, Speichereinheit SP, Bilddatenverarbeitungseinheit BDV und Druckwerk DW.

Figur 2 zeigt die Umsetzung der Bilddaten in horizontaler Richtung (pro Zeile) von 204,1 dpi (dots per inch, wobei 1 inch = 2.54 cm) in 300 dpi.

Figur 3 zeigt die Umsetzung der Bilddaten in vertikaler Richtung (Zeilenabstand) von 195,6 dpi in 300 dpi.

Die bei Fax-Bildübertragungen bei Empfangseinheit EE ankommenden Bilddaten entsprechen üblicherweise einer Auflösung von 204,1 dpi in horizontaler und 195,6 dpi in vertikaler Richtung. Die Daten werden in einer Speichereinheit SP für eine ganze Übertragungsseite gespeichert und nach der seitenweisen Speicherung an das Druckwerk DW zum zeilenweisen Ausdruck weitergegeben.

Im vorliegenden Fall soll ein höher auflösendes Druckwerk verwendet werden. Dieses Druckwerk ist für eine Auflösung von 300 dpi in horizontaler und vertikaler Richtung ausgelegt. Über eine zwischen Speichereinheit SP und Druckwerk DW angeordnete Bilddatenverarbeitung BDV soll eine entsprechende Umsetzung der Bilddaten erfolgen. Dabei ergibt sich in horizontaler Richtung ein Umsetzungsfaktor von 300 dpi:204,1 dpi= 1,469. In vertikaler Richtung ergibt sich ein Umsetzungsfaktor von 300 dpi:195,6 dpi= 1,533. In der jeweiligen Richtung muß dieser Umsetzungsfaktor möglichst genau erreicht werden, so daß eine geometrische Verzerrung von 1% nicht überschritten wird (CCITT-Forderung).

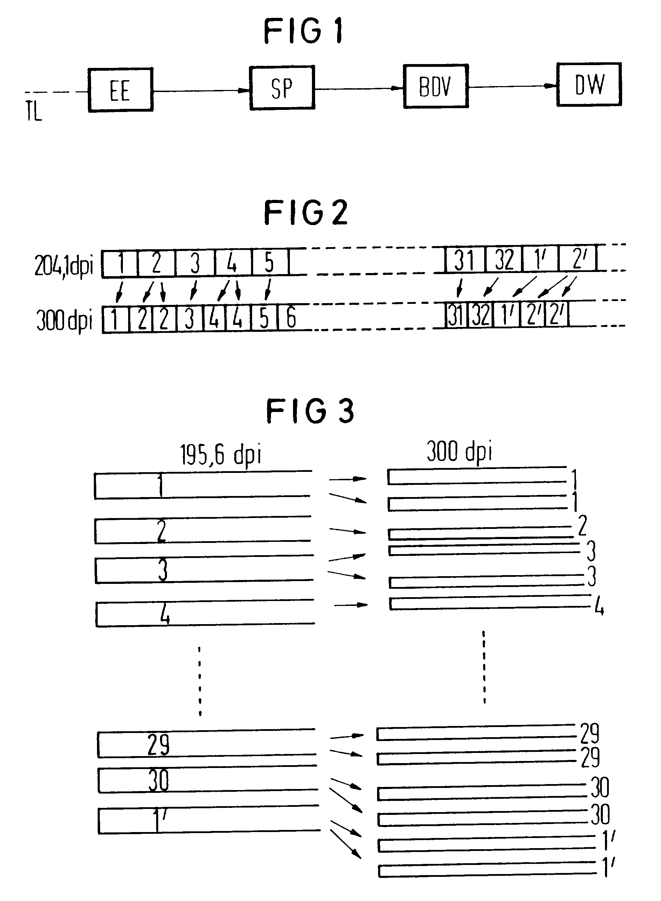

Bei der höheren Auflösung ergeben sich zwangsläufig mehr Bilddaten pro Seite einer Übertragung. Wollte man die Bilddaten für die höhere Auflösung speichern, dann ist auch zwangsläufig eine höhere Speicherkapazität notwendig. Um dies zu vermeiden, werden die Bilddaten pro Seite nach der Erfindung in der Form der niedrigeren Auflösung gespeichert und die Umsetzung erfolgt erst bei Abgabe an das Druckwerk DW mittels der Bilddatenverarbeitungseinheit BDV.
Die Umsetzung der Bilddaten in horizontaler Richtung -also innerhalb jeder Zeile- erfolgt dadurch, daß die bei Faxübertragung festgelegte Zahl von 1728 Bildpunkten je Zeile in 54 Blöcke mit je 32 Bildpunkten aufgeteilt wird. Bei der Ausspeicherung einer Zeile an das Druckwerk DW wiederholt die Bilddatenverarbeitungseinheit BDV jeden zweiten Bildpunkt eines Blockes in einer Zeile mit Ausnahme des 32. Bildpunktes in jedem Block. An die Stelle der Wiederholung des 32. Bildpunktes tritt dafür der erste Bildpunkt des nachfolgendes Blockes. Daraus ergibt sich ein Umsetzungsfaktor von (48-1) Bildpunkten zu 32 Bildpunkten = 1,468, welcher sich von dem gewünschten Ergebnis nur um 0,001 unterscheidet (0,1%). Die Umsetzung der Bilddaten in vertikaler Richtung erfolgt dadurch, daß ein Umsetzungszyklus von 30 Bildpunktzeilen festgelegt ist. Beim Ausspeichern der Bilddaten aus der Speichereinheit SP zwecks Ausdrucken einer Vorlagenseite wird durch die Bilddatenverarbeitungseinheit BDV jede ungerade Zeile (Fig. 3) wiederholt. Zusätzlich wird auch die 30. Zeile des Umsetzungszyklus wiederholt.
Aus der Umsetzung in vertikaler Richtung von 300 dpi zu 195,6 dpi ergibt sich der Umsetzungsfaktor 1,533. Bei der Vermehrung der Zeilen beim Ausdrucken der Vorlagenseite ergibt sich im Umsetzungszyklus ein Zeilenverhältnis von (45+1) Zeilen zu 30 Zeilen und damit ein Faktor von 1,533. Damit ist die geometrische Verzerrung oder Verfälschung in vertikaler Richtung 0,03%.

Aus dem Vorstehenden geht hervor, daß die als Aufgabe vorgesehene Umsetzung der Bilddaten ohne Vergrößerung der Speichereinheit und mit ausreichend kleiner geometrischer Verzerrung mit dem erfindungsgemäßen Verfahren in einfacher Weise erreicht werden kann.

## Patentansprüche

1. Verfahren zum Umsetzen von ankommenden Bilddaten für Faksimiledruckwerke mit Auflösungen, die höher sind als die der ankommenden Bilddaten, wobei die ankommenden Bilddaten jeweils für eine ganze Vorlagenseite vor dem Ausdruck abgespeichert werden, wobei je Bildpunktzeile ankommend 1728 Bildpunkte vorgegeben sind und wobei die Bildpunkte einer Bild-datenzeile in Blöcke und untereinander liegende Bildpunktzeichen in Zyklen aufgeteilt sind,
**dadurch gekennzeichnet**,
daß zur Umsetzung in horizontaler Richtung und damit in einer Bildpunktzeile 54 Blöcke mit je 32 Bildpunkten gebildet werden, wobei beim dem Abspeichern der Seite nachfolgenden Ausdrucken in einer Bildverarbeitungseinheit (BDV) jeder zweite Bildpunkt verdoppelt wird, die Verdoppelung des 32. Bildpunktes jedoch durch den ersten Bildpunkt (1') des nächsten Blockes ersetzt wird und daß zur Umsetzung in vertikaler Richtung und damit bezogen auf die aufeinanderfolgenden Bildpunktzeilen ein Zyklus von je 30 Bildpunktzeilen gebildet wird, wobei beim Ausdrucken mittels der Bildverarbeitungseinheit (BDV) alle ungeraden Bildpunktzeilen und die dreißigste Bildpunktzeile (30) doppelt an das Faksimiledruckwerk abgegeben werden.

## Claims

1. Method for the conversion of incoming image data for facsimile printers having resolutions which are higher than those of the incoming image data, the respective incoming image data for a complete original page being stored prior to print-out, 1728 dots being prescribed for each incoming line of dots and the dots of one line of image data being divided into blocks and lines of dots lying one under the other being divided into cycles, characterized in that, for the purpose of conversion in the horizontal direction, and hence in a line of dots, 54 blocks each having 32 dots are formed, every second dot being duplicated in an image processing unit (BDV) during printing out which follows storage of the page, but the duplication of the 32nd dot being replaced by the first dot (1') of the next block, and in that, for the purpose of conversion in the vertical direction, and hence referring to the successive lines of dots, a cycle of 30 lines of dots is in each case formed, all of the odd lines of dots and the 30th line of dots (30) being output twice to the facsimile printer by means of the image processing unit (BDV) during printing out.

## Revendications

1. Procédé de conversion de données d'image arrivant pour des imprimantes de fac-similés ayant des résolutions qui sont supérieures à celles des données d'image arrivant, selon lequel on mémorise les données d'image arrivant pour une page complète de l'original avant l'impression, on prescrit 1728 éléments d'image à l'arrivée pour chaque ligne d'éléments d'image et on subdivise les éléments d'image d'une ligne de données d'image en blocs, et des caractères d'éléments d'image les uns sous les autres en cycles,
caractérisé par le fait
que pour la conversion dans la direction horizontale et par conséquent dans une ligne d'éléments d'image, on forme 54 blocs comportant chacun 32 éléments d'image, on duplique lors de l'impression, qui succède à la mémorisation de la page, un élément d'image sur deux dans une unité de traitement d'image (BDV), on remplace la duplication du 32-ème élément d'image cependant par le premier élément d'image (1') du bloc suivant, et on forme, pour la conversion dans la direction verticale et par conséquent d'une manière rapportée aux lignes successives d'éléments d'image, un cycle comprenant 30 lignes d'éléments d'image, on fournit, lors de l'impression, toutes les lignes impaires d'éléments d'image et la trentième ligne d'éléments d'image (30) en double, au moyen de l'unité de traitement d'images (BDV), à l'imprimante de fac-similés.
